# EUROPÄISCHE PATENTSCHRIFT

(11) **EP 0 464 028 B1**
(45) Veröffentlichungstag und Bekanntmachung des Hinweises auf die Patenterteilung: **20.04.1994**
(21) Anmeldenummer: 90902245.1
(22) Anmeldetag: 09.02.1990
(51) Int. Cl.: G06F 15/16, G06F 9/44

(54) **MULTIPROZESSORSYSTEM**
MULTIPROCESSOR SYSTEM
SYSTEME MULTIPROCESSEURS

(30) Priorität: 21.03.1989 EP 89105074
(43) Veröffentlichungstag der Anmeldung: 08.01.1992
(73) Patentinhaber: Siemens Nixdorf Informationssysteme Aktiengesellschaft, 33102 Paderborn (DE)
(72) Erfinder: BEST, Arno, W-8000 München 80 (DE)
(86) Internationale Anmeldenummer: EP9000216
(87) Internationale Veröffentlichungsnummer: WO9011567

(56) Entgegenhaltungen:
- EP-A- 0 023 160
- EP-A- 0 077 404
- EP-A- 0 270 680
- DE-A- 3 411 105
- RADIO FERNSEHEN ELEKTRONIK, vol. 33, no. 12, Dezember 1984, Berlin DD, Seiten 773-776; Matthes W.: "Multimikrorechnersysteme 9".
- IBM TECHNICAL DISCLOSURE BULLETIN, vol. 22, no. 6, November 1979, New York US, Seiten 2440-2441; B. Manning: "Microprogrammed Processor having PLA control store"

## Beschreibung

Die Erfindung bezieht sich auf ein Multiprozessorsystem.

Unter einem Multiprozessorsystem versteht man das Zusammenschließen von mehreren einzelnen Prozessoren zu einer Funktionseinheit. Ein Prozessor ist dabei eine Einrichtung, die nach vorgegebenen Programmen die Funktionen anderer Einrichtungen steuert. Arbeiten nun entweder mehrere Prozessoren gleichberechtigt nebeneinander oder übernimmt einer die Führung (deshalb auch Master-Prozessor genannt) und steuert die Arbeit der anderen (die deshalb auch als Slave-Prozessoren bezeichnet werden), so wird die Zusammenarbeit in der Regel durch ein Betriebssystem ermöglicht.

Im Unterschied zu einem Einprozessorsystem ist ein Multiprozessorsystem sowohl leistungsfähiger als auch zuverlässiger. Eine höhere Zuverlässigkeit ergibt sich insbesondere dann, wenn jeder Prozessor des Multiprozessorsystems auch als Einzelprozessor betrieben werden kann. Bei einem Zweiprozessorsystem läßt sich somit für den Fall, daß ein Prozessor ausfällt, das Zweiprozessorsystem weiterbetreiben. Das Multiprozessorsystem wird deshalb vorzugsweise auf Anwendungsgebieten eingesetzt, wo bedingt durch die steigenden technischen Anforderungen immer komplexere Aufgaben gelöst werden müssen.

Ein typisches Einsatzgebiet für das Multiprozessorsystem ist beispielsweise ein nichtmechanischer Drucker, wo das Multiprozessorsystem die Aufgabe hat, Funktionsabläufe und -einheiten zu steuern.

Eine Funktionseinheit innerhalb des nichtmechanischen Druckers ist beispielsweise eine Fixierstation, deren Aufgabe es ist, eine umgedruckte Information auf einem Aufzeichnungsträger, beispielsweise ein Blatt Papier, dokumentenecht zu machen. Das geschieht über die kontrollierte Erwärmung einer Walze, die mit einer zum übrigen Papierweg synchronen Oberflächengeschwindigkeit rotiert und an die das Papier mittels weiterer mechanischer Vorrichtungen, wie z. B. Anpreßwalze und Anschwenksattel, angepreßt wird, so daß Farbpartikel auf dem Papier schmelzen und auf diese Weise mit dem Papier eine Verbindung eingehen. Ferner beinhaltet diese Fixierstation eine Vorrichtung zum Stapeln des vorher fixierten Papiers.

Die Funktionsabläufe innerhalb dieser Einheit beinhalten unter anderem Temperaturregelungen, Geschwindigkeitsregelungen, Steuerung von Positionierantrieben, Fehlererfassung und -überwachung und Koordinierung der Abläufe innerhalb der Station in Einklang mit dem Gesamtgerät.

Aufgrund der Erfordernis, eine Vielzahl der Abläufe zeitgleich zu kontrollieren und die dafür vorgesehene Steuereinrichtung zuverlässig und platzsparend aufzubauen, kommt hier ein Multiprozessorsystem zum Einsatz.

Beim Aufbau eines Multiprozessorsystems ist es üblich, mehrere Mikroprozessoren zu verwenden, die über ein Bussystem miteinander verbunden sind. Die Mikroprozessoren sind darüber hinaus jeweils mit einem programmier-, löschbaren Festwertspeicher und einem Schreib-/Lesespeicher zusammengeschaltet. Somit kann jeder Mikroprozessor Programminformationen aus dem programmier-, löschbaren Festwertspeicher sowie Daten aus dem Schreib-/Lesespeicher selbständig be- bzw. verarbeiten.

Für ein derartiges Multiprozessorsystem, bei dem alle Mikroprozessoren nach dem Einschalten der Betriebsspannung sofort starten können, ist es nachteilig, daß beim Austauschen der programmier-, löschbaren Festwertspeicher Steckfehler auftreten können. Darüber hinaus ist es erforderlich, verschiedene programmier-, löschbare Festwertspeicher softwaremäßig zu warten. Außerdem entstehen mit der Realisierung des Multiprozessorsystems zusätzliche Hardwarekosten für die programmier-, löschbaren Festwertspeicher. Nachteilig ist es ferner, daß die programmier-, löschbaren Festweitspeicher beim Aufbau des Multiprozessorsystems platzbedürftig sind.

Aus der EP-A1-0 077 404 ist ein Multiprozessorsystem bekannt, bei dem Programminformationen innerhalb des Systems selbständig übergeben werden können. Das Multiprozessorsystem weist dazu eine als Mikroprozessor ausgebildete Ladeeinheit (loading unit) auf, die die in einem nicht flüchtigen Speicher (nonvolatile memory) enthaltene Programminformation ausliest und an Subprozessorsysteme überträgt. Die Subprozessorsysteme enthalten Mikroprozessoren mit dazugehörigen Schreib/Lesespeichern, in die die aus dem nicht flüchtigen Speicher herausgelesene Programminformation gespeichert wird. Für die Übertragung der Programminformation sind die Ladeeinheit, der nicht flüchtige Speicher und die Mikroprozessoren mit den Schreib/Lesespeichern über ein Bussystem miteinander verbunden. Darüber hinaus sind die Subprozessorsysteme über weitere Busleitungen mit Ausgabeeinheiten verbunden. Die Ausgabeeinheit ist dabei jeweils als Motor ausgebildet, der von den Mikroprozessoren der Subprozessorsysteme gesteuert wird.

Aufgabe der Erfindung ist es, ein Multiprozessorsystem wartungsfreundlich und kostengünstig bei minimalem Platzbedarf aufzubauen, bei dem Programminformationen innerhalb des Systems sicher übertragen werden.

Diese Aufgabe wird durch die Merkmale des Patentanspruches 1 gelöst.

Vorteilhafte Ausführungsformen der Erfindung sind in den Unteransprüchen angegeben.

Ein als Master-Prozessor dienender Mikroprozessor überträgt Programminformationen aus einem einzigen programmier-, löschbaren Festwertspeicher an mehrere Subprozessorsysteme, die jeweils einen weiteren als Slave-Prozessor dienenden, dem Master-Prozessor untergeordneten Mikroprozessor enthalten.

Durch die Einsparung von programmier-, löschbaren Festwertspeichern wird die Gefahr herabgesetzt, daß beim Austauschen der programmier-, löschbaren Festwertspeicher Steckfehler auftreten. Mit der Begrenzung auf einen einzigen programmier-, löschbaren Festwertspeicher für das gesamte Multiprozessorsystem sind Wartung und Wartungskosten für die Software des programmier-, löschbaren Festwertspeichers gering. Demut nimmt die Zuverlässigkeit des Multiprozessorsystems zu.

Bei einer Ausführungsform der Erfindung gemäß Anspruch 1 wird nach jedem Schreibvorgang eines Übertragungszyklus die geschriebene Programminformation byteweise rückgelesen.

Dadurch lassen sich neben Übertragungsfehlern auch systematische Fehler, wie beispielsweise ein Leitungsbruch oder Kurzschluß im Bussystem, erkennen. In diesem Zusammenhang ist es vorteilhaft, daß der Mikroprozessor nach einer bestimmten Anzahl von unkorrekt abgelaufenen Übertragungszyklen die Arbeitsunfähigkeit des Multiprozessorsystems meldet. Das Speichern der Programminformation in dem Subprozessorsystem wird durch Steuerelemente, beispielsweise PLD's (Programmable Logic Device) oder PAL's (Programmable Array Logic), organisiert, die verhindern, daß ein bereits belegter Speicherplatz in einem Schreib-/Lesespeicher nochmals adressiert und beschrieben wird.

Bei einer weiteren bevorzugten Ausführungsform der Erfindung werden Funktionsabläufe und -einheiten in einer Druckeinrichtung funktionssicher sowie ohne großen Aufwand exakt und schnell gesteuert.

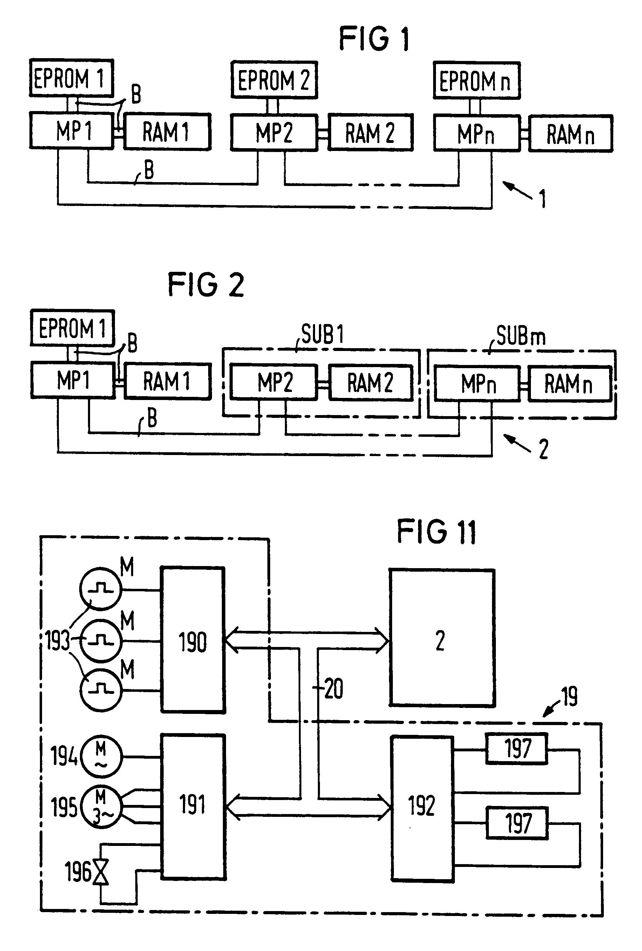

FIG 1 zeigt einen üblichen schematischen Aufbau eines Multiprozessorsystems mit n-Mikroprozessoren.

Ein Ausführungsbeispiel der Erfindung wird anhand der Zeichnungen von FIG 2 bis FIG 11 erläutert. Es zeigen:
FIG 2 einen schematischen Aufbau eines Multiprozessorsystems mit n-Mikroprozessoren,
FIG 3 eine hardwaremäßige Realisierung eines Multiprozessorsystems gemäß FIG 2 mit zwei Subprozessorsystemen einer übergeordneten Master-Prozessorarchitektur,
FIG 4 eine hardwaremäßige Realisierung eines Subprozessorsystems,
FIG 5 bis 10 einen prinzipiellen zeitlichen Funktionsablauf des Multiprozessorsystems gemäß FIG 3 beim Übertragen von Programminformation innerhalb des Systems,
FIG 11 einen Anwendungsfall des Multiprozessorsystems gemäß FIG 2.

Die FIG 1 zeigt in einer Prinzipdarstellung ein übliches Multiprozessorsystem 1 mit n-Mikroprozessoren MP1 ... MPn, die über ein Bussystem B miteinander verbunden sind. Darüber hinaus ist der Mikroprozessor MP1 mit einem programmier-, löschbaren Festwertspeicher EPROM1 und einem Schreib-/Lesespeicher RAM1 zusammengeschaltet. Das gleiche gilt auch für den Mikroprozessor MP2 und dem n-ten Mikroprozessor MPn, die mit einem weiteren programmier-, löschbaren Festwertspeicher EPROM2 bzw. EPROMn und einem weiteren Schreib-/Lesespeicher RAM2 bzw. RAMn verbunden sind.

Somit kann jeder Mikroprozessor MP1 ... MPn des Multiprozessorsystems 1 selbständig auf Programminformationen in dem entsprechenden programmier-, löschbaren Festwertspeicher EPROM1 ... EPROMn zugreifen.

In FIG 2 ist im Unterschied zur FIG 1 ein Multiprozessorsystem 2 mit den Mikroprozessoren MP1 ... MPn gezeigt, die die Programminformation aus einem einzigen programmier-, löschbaren Festwertspeicher EPROM1 erhalten. Der programmier-, löschbare Festwertspeicher EPROM1 ist dazu, wie in FIG 1, über das Bussystem B mit dem Mikroprozessor MP1 elektrisch verbunden.

Der Mikroprozessor MP1 ist als Master-Prozessor vorgesehen und bildet mit dem programmier-, löschbaren Festwertspeicher EPROM1 und einem Schreib-/Lesespeicher RAM1 eine gemeinsame Funktionseinheit, die mehreren Subprozessorsystemen SUB1 ... SUBm über-geordnet ist. Der Schreib-/Lesespeicher RAM1 ist wie der programmier-, löschbare Festwertspeicher EPROM1 über das Bussystem B mit dem Mikroprozessor MP1 verbunden. Das Subprozessorsystem SUB1 enthält einen als Slave-Prozessor dienenden Mikroprozessor MP2 und einen weiteren Schreib/Lesespeicher RAM2, die ebenfalls an das Bussystem B angeschlossen sind. Das gleiche gilt für das m-te Subprozessorsystem SUBm, das einen als Slave-Prozessor dienenden Mikroprozessor MPn und einen weiteren Schreib-/Lesespeicher RAMn aufweist. Der Schreib-/Lesespeicher RAM2 ... RAMn dient jeweils als Speicherplatz für die den entsprechenden Mikroprozessor MP2 ... MPn bestimmte Programminformation, die durch den Mikroprozessor MP1 von dem programmier-, löschbaren Festwertspeicher EPROM1 dem jeweiligen Schreib-/Lesespeicher RAM2 ... RAMn übermittelt wird. Das Übermitteln der Programminformation durch den Mikroprozessor MP1 an das Subprozessorsystem SUB1 ... SUBm erfolgt derart, daß dieser nach dem Anlegen einer Versorgungsspannung den Schreib/Lesespeicher RAM2 ... RAMn nacheinander mit der jeweiligen, für den adressierten Mikroprozessor MP2 ... MPn bestimmten Programminformation beschickt. Um Fehler bei der Übertragung der Programminformation zu vermeiden, wird jedes Byte der Programminformation nach der Übertragung rückgelesen. Dadurch lassen sich neben Übertragungsfehlern insbesondere systematische Fehler, beispielsweise ein Leitungsbruch oder Kurzschluß, auf der Übertragungsstrecke zwischen dem Mikroprozessor MP1 und dem jeweiligen, adressierten Schreib-/Lesespeicher RAM2 ... RAMn feststellen. Für den Fall, daß beim Rücklesen ein Fehler entdeckt wird, wird ein neuer Übertragungszyklus mit dem Beschreiben der Schreib-/Lesespeicher RAM2 ... RAMn und dem Rücklesen der geschriebenen Programminformation gestartet. Laufen mehrere dieser Übertragungszyklen unkorrekt ab, so meldet der Mikroprozessor MP1 die Arbeitsunfähigkeit des gesamten Mikroprozessorsystems 2.

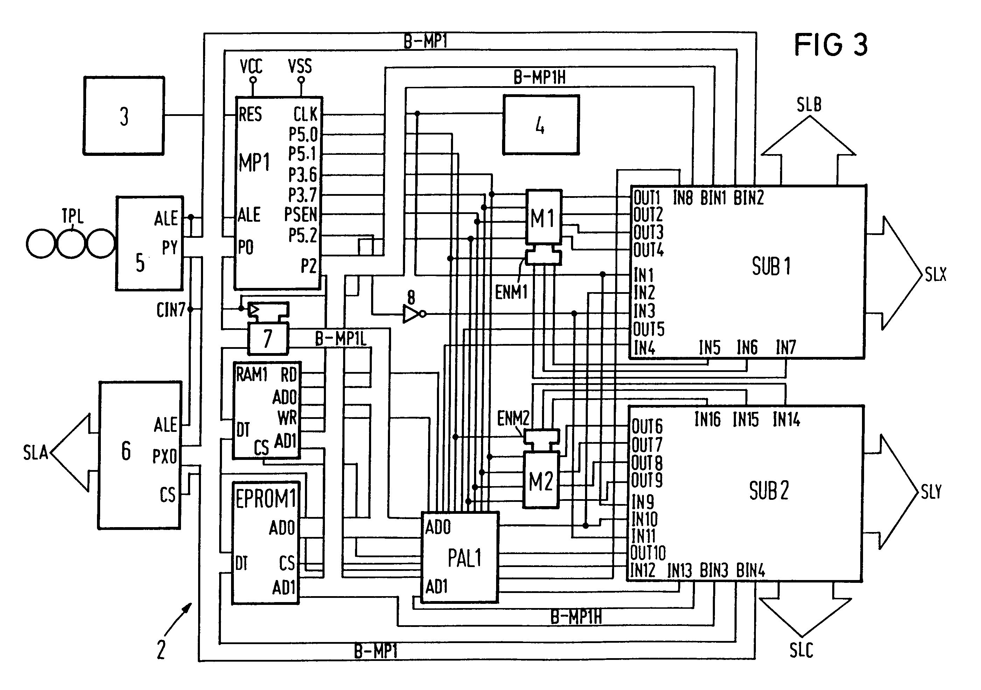

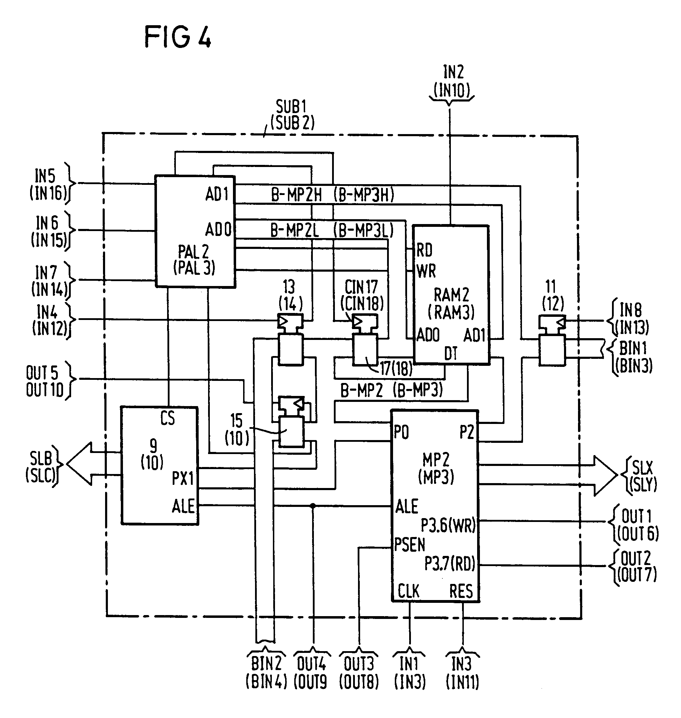

Die FIG 3 zeigt die hardwaremäßige Realisierung des Multiprozessorsystems 2 gemäß FIG 2 mit dem als Master-Prozessor dienenden Mikroprozessor MP1, der über das Bussystem B im vorliegenden Fall mit zwei statt mit m Subprozessorsystemen SUB1, SUB2 verbunden ist. Das Bussystem B setzt sich dabei aus Daten-, Adreß- und Steuerleitungen zusammen. Das Subprozessorsystem SUB1, SUB2 ist in der FIG 3 nur als Funktionsblock dargestellt. Wie das Subprozessorsystem SUB1, SUB2 im einzelnen aufgebaut ist, ergibt sich aus FIG 4.

Die Aufgabe des Mikroprozessors MP1 ist es dabei insbesondere, das Subprozessorsystem SUB1, SUB2 über das Bussystem B zu steuern bzw. mit Programminformationen und Daten zu versorgen.

Wenn im folgenden von Programminformationen die Rede ist, so sind hiermit Maschinenbefehle als Bestandteil eines Mikroprogramms gemeint. Aufgrund der Struktur eines Maschinenbefehls, der Unterscheidung zwischen einem Operationsteil (OP-Code) und Operandenteil (Adressen, Operand), besteht eine Programminformation aus Adressen und Daten.

Bei den für die Realisierung des Multiprozessorsystems 2 verwendeten Mikroprozessors MP2 handelt es sich um einen 8-bit-Mikrosteuerbaustein (Microcontroller) vom Typ SAB80535 (Siemens Users Manual 7.85). Charakteristisch für den verwendeten Mikroprozessor MP1 ist ein 68-pin-Gehäuse, von denen die wichtigsten, für die Funktion des Multiprozessorsystems 2 notwendigen pin-Belegungen in der FIG 3 angegeben sind.

Danach weist der Mikroprozessor MP1 unter anderem einen RESET-Eingang RES auf. Über diesen RESET-Eingang RES wird der Mikroprozessor MP1 nach dem Anlegen einer Versorgungsspannung VCC/VSS an Netzeingänge VCC, VSS zu bestimmten, intern ablaufenden oder extern über einen Takteingang CLK aufgezwungenen Maschinenzyklen in einen definierten Ausgangszustand rückgesetzt. Zum Kommunizieren mit dem Subprozessorsystem SUB1, SUB2 innerhalb des Multiprozessorsystems 2 weist der Mikroprozessor MP1 sechs 8-bit Eingang/Ausgang-Tore P0 ... P5 auf. Statt des Begriffs Eingang/ Ausgang-Tor soll im folgenden die englische Bezeichnung Input/ Output-Port bzw. I/O-Port verwendet werden. Die für den Mikroprozessor MP1 bestimmten und von diesem ausgegebenen Adressen und Daten werden über die I/O-Ports P0, P2 übertragen. Über den I/O-Port P0 wird sowohl der Daten- als auch der Adressentransfer abgewickelt, während über den I/O-Port P2 nur Adressen transferiert werden. Durch die Aufteilung der Adressenübertragung auf zwei I/O-Ports können somit bei einem externen Speicherzugriff wahlweise 8-bit-Adressen oder 16-bit-Adressen benutzt werden.

Während man für den Zugriff auf einen externen Programmspeicher ausschließlich 16-bit-Adressen verwendet, können beim Zugriff auf einen externen Datenspeicher sowohl 8- als auch 16-bit-Adressen benutzt werden. Beim Übertragen einer 16-bit-Adresse wird der höherwertige Byteanteil der Adresse über den I/O-Port P2 ausgegeben, während der niederwertige Byteanteil über den Port P0 übertragen wird. Dadurch, daß über den I/O-Port P0 sowohl Daten als auch der niederwertige Byteanteil der Adressen übertragen wird, muß der Daten- und Adressentransfer zeitlich gesteuert werden. Hierfür liefert der Mikroprozessor MP1 an einem Ausgang ALE (Address Latch Enable) ein ALE-Steuersignal M-ALE.

Um weiterhin entscheiden zu können, ob entweder auf einen externen Programme- oder Datenspeicher zugegriffen werden soll, wird von dem Mikroprozessor MP1 an einem weiteren Ausgang PSEN (Program Store Enable) ein low-aktives P̅S̅E̅N̅-Steuersignal M-P̅S̅E̅N̅ ausgegeben. Weist dieses P̅S̅E̅N̅-Steuersignal M-P̅S̅E̅N̅ einen Low-Pegel auf, so kann der Mikroprozessor MP1 während der Dauer des Low-Pegels auf einen externen Programmspeicher zugreifen. Liegt hingegen am Ausgang PSEN ein High-Pegel des P̅S̅E̅N̅-Steuersignales M-P̅S̅E̅N̅ vor, so erfolgt kein Zugriff auf einen externen Programmspeicher. Während dieser Zeitdauer des High-Pegels besteht nunmehr die Möglichkeit, daß der Mikroprozessor MP1 über einen Port P3.6 einen Schreibzyklus WR sowie über einen I/O-Port P3.7 einen Lesezyklus RD starten kann. Mit der Bezeichnung P3.6 bzw. P3.7 ist in diesem Zusammenhang das sechste bzw. siebte Bit des I/O-Ports 3 vom Mikroprozessors MP1 gemeint.

Darüber hinaus liefert der Mikroprozessor MP1 an einem Port P5.0, P5.1, P5.2 jeweils ein weiteres Steuersignal, mit dem der als Master-Prozessor dienende Mikroprozessor MP1 den Adressentransfer mit dem untergeordneten Subprozessorsystems SUB1, SUB2 steuert bzw. das Subprozessorsystem SUB1, SUB2 rücksetzt. Mit den beschriebenen, für den Aufbau des Multiprozessorsystems 2 wesentlichen Ein-und Ausgängen des Mikroprozessors MP1 läßt sich nunmehr anhand der FIG 3 das in FIG 2 erläuterte Funktionsprinzip des Multiprozessorsystems 2 beschreiben.

Nach dem Anlegen der Versorgungsspannung VCC/VSS an den Netzeingängen VCC, VSS des Multiprozessorsystems 2 wird der Mikroprozessor MP1 über den RESET-Eingang RES von einem RESET-Steuerbaustein 3 rückgesetzt. Mit dem Anlegen der Versorgungsspannung VCC/VSS wird der Mikroprozessor MP1 außerdem über den Takteingang CLK von einem Taktgeber 4 extern getaktet. Entsprechendes gilt sowohl für das Subprozessorsystem SUB1, das über einen Takteingang IN1 ebenfalls von dem Taktgeber 4 extern getaktet wird, als auch für das Subprozessorsystem SUB2, das wie das Subprozessorsystem SUB1 über einen weiteren Takteingang IN9 von dem Taktgeber 4 extern getaktet wird. Darüber hinaus enthält der Mikroprozessor MP1 zusätzlich noch einen internen Taktgenerator, der Rechtecksignale mit einer Taktfrequenz von 12 MHz erzeugt und je nach Anwendungsfall auch alternativ benutzt werden kann. Der so getaktete und rückgesetzte Mikroprozessor MP1 übernimmt nun gemäß den Ausführungen zu FIG 2 die Aufgabe, dem Subprozessorsystem SUB1, SUB2 Programminformationen zu übergeben.

Der Mikroprozessor MP1 ist dazu mittel- oder unmittelbar über das Bussystem B mit einzelnen elektronischen Bauelementen des Multiprozessorsystems 2 elektrisch verbunden. Zu diesen elektronischen Bauelementen zählen neben dem Mikroprozessor MP1 und dem Subprozessorsystem SUB1, SUB2 insbesondere ein Schreib-/Lesespeicher RAM1 vom Typ SAB43256, ein programmier-, löschbarer Festwertspeicher EPROM1 vom Typ SAB27256 und ein Decodierlogik-Baustein PAL1 (Programmable Array Logic = PAL) vom Typ 4xPAL20L10 sowie als Schnittstelle ein I/O-Port-Baustein 6 vom Typ SAB82C55 und ein serieller Kommunikationssteuerbaustein (HSCC) 5 vom Typ SAB82520. Dieser serielle Kommunikationssteuerbaustein 5 verbindet dabei das Multiprozessorsystem 2 über eine Zweidrahtleitung (Twisted Pair-Leitung) TPL mit weiteren Prozessorsystemen.

Der I/O-Port P2 des Mikroprozessors MP1 ist über eine Busleitung B-MP1H des Bussystems B zur Übertragung der Adressen mit dem höherwertigen Byteanteil mit High-Adreßeingängen AD1 des Schreib-/Lesespeichers RAM1, des programmier-, löschbaren Festwertspeichers EPROM1, des Decodierlogik-Bausteines PAL1, einem BUS-Eingang BIN1 des Subprozessorsystems SUB1 und einem BUS-Eingang BIN3 des Subprozessorsystems SUB2 zusammengeschaltet. Der I/O-Port P0 des Mikroprozessors MP1 ist darüber hinaus zur Übertragung der Daten und Adressen mit dem niederwertigen Byteanteil über eine weitere Busleitung B-MP1 des Bussysstems B mit einem Einspeicherelement (Latch), Dateneingängen DT des Schreib-/Lesespeichers RAM1 und des programmier-, löschbaren Festwertspeichers EPROM1, einem I/O-Port PX0 des I/O-Port-Bausteins 6, einem I/O-Port PY des seriellen Kommunikations-Steuerbausteins 5, einem BUS-Eingang BIN2 des Subprozessorsystems SUB1 und einem BUS-Eingang BIN4 des Subprozessorsystems SUB2 elektrisch verbunden.

Dem Einspeicherelement 7 kommt dabei die Aufgabe zu, das Übertragen der Daten und Adressen mit dem niederwertigen Byteanteil auf der Busleitung B-MP1 zu entkoppeln. Dazu wird an einem Takteingang CIN7 des Einspeicherelementes 7 das ALE-Steuersignal M-ALE des Mikroprozessors MP1 angelegt. Das Einspeicherelement 7 ist ferner ausgangsseitig über eine Busleitung B-MP1L jeweils mit einem Low-Adreßeingang AD0 des Schreib-/Lesespeichers RAM1, des programmier-, löschbaren Festwertspeichers EPROM1 und des Decodierlogik-Bausteines PAL1 elektrisch verbunden. Das ALE-Steuersignal M-ALE wird darüber hinaus außerdem an dem seriellen Kommunikations-Steuerbaustein 5, dem I/O-Port-Baustein 6 und an zwei Multiplexer M1, M2 vom Typ 74 ALS157 gelegt.

Der Multiplexer M1, M2 hat dabei die Aufgabe, die Kommunikationsfähigkeit zwischen dem Mikroprozessor MP1 und dem Subprozessorsystem SUB1, SUB2 herzustellen. Dazu ist der Multiplexer M1, M2 neben dem Ausgang ALE des Mikroprozessors MP1 eingangsseitig zusätzlich jeweils mit dem I/O-Port P3.6, dem I/O-Port P3.7 und dem Ausgang PSEN elektrisch verbunden. Andererseits ist der Multiplexer M2 über einen Enable-Eingang ENM2 mit dem I/O-Port P5.1 und der Multiplexer M1 über einen Enable-Eingang ENM1 mit dem I/O-Port P5.0 galvanisch gekoppelt, um die an den Eingängen jeweils anliegende Information freigeben zu können. Eingangsseitig ist der Multiplexer M1 darüber hinaus noch mit Ausgängen OUT1 ... OUT4 des Subprozessorsystems SUB1 und der Multiplexer M2 mit weiteren Ausgängen OUT6 ... OUT9 des Subprozessorsystems SUB2 verbunden. Neben dieser eingangsseitigen galvanischen Kopplung der Multiplexer M1, M2 mit den Subprozessorsystemen SUB1, SUB2 bestehen aber auch ausgangsseitige galvanische Kopplungen. So ist der Multiplexer M2 mit Eingängen IN14 ... IN16 des Subprozessorsystems SUB2 und der Multiplexer M1 mit Eingängen IN5 ... IN7 des Subprozessorsystems SUB1 zusammengeschaltet.

Der Decodierlogik-Baustein PAL1 ist eingangsseitig mit einem Ausgang OUT5 des Subprozessorsystems SUB1 und einem Ausgang OUT10 des Subprozessorsystems SUB2 gekoppelt. Darüber hinaus besteht eingangsseitig zusätzlich noch mit dem I/O-Port P5.0, P5.1, dem Ausgang PSEN, dem I/O-Port P3.6 für den Schreibvorgang WR sowie den I/O-Port P3.7 für den Lesevorgang RD des Mikroprozessors MP1 eine elektrische Verbindung. Als Ausgangsgröße für den Decodierlogik-Baustein PAL1 dient ein CS (Chip Select)-Steuersignal CS-ST, das für einen beabsichtigten Zugriff des Mikroprozessors MP1 auf den I/O-Port-Baustein 6, den Schreib/Lesespeicher RAM1 und den programmier-, löschbaren Festwertspeicher EPROM1 jeweils an Eingänge CS angelegt wird. Ausgangsseitig ist der Decodierlogik-Baustein PAL1 ferner mit Eingängen IN2, IN4, IN8 des Subprozessorsystems SUB1 und Eingängen IN10, IN12, IN13 des Subprozessorsystems SUB2 zusammengeschaltet.

Die Kommunikation des Mikroprozessors MP1 mit weiteren Prozessorsystemen wird durch den I/O-Port-Baustein 6 über eine Signalleitung SLA und der Zweidrahtleitung TPL hergestellt.

Damit das in FIG 3 dargestellte Multiprozessorsystem 2 funktionsfähig ist, der Mikroprozessor MP1 also mit dem Subprozessorsystem SUB1, SUB2 ungehindert, bei einem eindeutig definierten Ausgangszustand kommunizieren kann, ist der I/O-Port P5.2 über einen Inverter 8 jeweils mit einem Eingang IN3 des Subprozessorsystems SUB1 und einem weiteren Eingang IN11 des Subprozessorsystems SUB2 verbunden. Wenn beispielsweise sowohl das Subprozessorsystem SUB1 über eine Signalleitung SLX als auch das Subprozessorsystem SUB2 über eine weitere Signalleitung SLY die bereits angesprochene Steuerung von Funktionsabläufen und -einheiten einer Druckeinrichtung, insbesondere eines nichtmechanischen Druckers übernehmen soll, so werden die Subprozessorsysteme SUB1, SUB2 nach dem Rücksetzen in einen definierten Ausgangszustand und dem Übertragen der Programminformation in einen Schreib-/Lesespeicher des Subprozessorsystems SUB1, SUB2 durch Deaktivieren des RESET-Befehls für die Steuerung der Funktionsabläufe und -einheiten freigegeben. Die Freigabe kann dabei gleichzeitig oder zeitlich versetzt erfolgen. Neben den Signalleitungen SLX, SLY weist jedes Subprozessorsystem SUB1, SUB2 noch eine weitere Signalleitung SLB bzw. SLC auf, über die das jeweilige Subprozessorsystem SUB1, SUB2 mit weiteren Prozessorsystemen kommuniziert.

Die FIG 4 zeigt den Aufbau des Subprozessorsystems SUB1, SUB2. Der Aufbau ist für beide Subprozessorsysteme SUB1, SUB2 identisch, so daß in FIG 4 sowohl die Ein- bzw. Ausgänge des Subprozessorsystems SUB1 als auch in Klammern die Ein- bzw. Ausgänge des Subprozessorsystems SUB2 gleichzeitig angegeben sind. Typisch für die Struktur des Subprozessorsystems SUB1, SUB2 ist ein Mikroprozessor MP2, (MP3), der für das vorliegende Ausführungsbeispiel dem Mikroprozessor MP1 des Multiprozessorsystems 2 gemäß FIG 3 in den charakteristischen Merkmalen entspricht. Das gleiche trifft in diesem Zusammenhang auch auf einen Schreib-/Lesespeicher RAM2, (RAM3), einem Decodierlogik-Baustein PAL2, (PAL3), einem I/O-Port-Baustein 9, (10), sowie einem Einspeicherelement 13, (14), 15, (16), 17, (18) zu, die alle den entsprechenden elektronischen Bauelementen in FIG 3 gleichkommen. Ergänzt wird das Subprozessorsystems SUB1, SUB2 weiterhin durch einen Treiberbaustein 11, (12) (Driver), der über den Eingang IN8, (IN13) zur Ansteuerung und über den BUS-Eingang BIN1, (BIN3) für den Transfer der Adressen mit dem höherwertigen Byteanteil mit der Master-Prozessorarchitektur verbunden ist. Ausgangsseitig ist der Treiberbaustein 11, (12) über eine Busleitung B-MP2H, (B-MP3H) an High-Adreßeingänge AD1 des Schreib-/Lesespeichers RAM2, (RAM3) und des Decodierlogik-Bausteines PAL2, (PAL3) sowie an den I/O-Port P2 des Mikroprozessors MP2, (MP3) gelegt.

Für die Übernahme der über den BUS-Eingang BIN2, (BIN4) in das oder aus dem Subprozessorsystem SUB1, SUB2 transferierten Daten und Adressen mit dem niederwertigen Byteanteil sind die Einspeicherelemente 13, (14), 15, (16) verantwortlich. Die Einspeicherelemente 13, (14), 15, (16) übernehmen dabei jeweils eine Ventilfunktion und regeln somit den richtungsabhängigen Daten- und Adressenaustausch zwischen der Master-Prozessorarchitektur und dem Subprozessorsystem SUB1, SUB2. Dazu ist das Einspeicherelement 13, (14) ausgangsseitig und das Einspeicherelement 15, (16) eingangsseitig über eine Busleitung B-MP2, (B-MP3) sowohl mit dem I/O-Port P0 des Mikroprozessors MP2, (MP3) als auch mit einem Port PX1 des I/O-Port-Bausteins 9, (10) und dem Dateneingang DT des Schreib-/Lesespeichers RAM2, (RAM3) zusammengeschaltet. Um die Ventilfunktion ausüben zu können, ist das Einspeicherelement 13, (14) ausgangsseitig mit dem Decodierlogik-Baustein PAL2, (PAL3) und über den Eingang IN4, (IN12) mit der Peripherie des Subprozessorsystems SUB1, SUB2 galvanisch gekoppelt. Genau invers dazu stellen sich die Verhältnisse bei dem Einspeicherelement 15, (16) dar. So ist das Einspeicherelement 15, (16) über den Ausgang OUT5, (OUT10) mit der Peripherie des Subprozessorsystems SUB1, SUB2 und eingangsseitig mit dem Decodierlogik-Baustein PAL2, (PAL3) elektrisch verbunden.

Damit die in das Subprozessorsystem SUB1, SUB2 transferierten Daten und Adressen mit dem niederwertigen Byteanteil auf der Busleitung B-MP2, (B-MP3) voneinander entkoppelt werden, ist analog zu der Master-Prozessorarchitektur in FIG 3 das Einspeicherelement 17, (18) vorgesehen. An einen Takteingang CIN17, (CIN18) des Einspeicherelementes 17, (18) wird dazu das ALE-Steuersignal M-ALE bzw. ein weiteres ALE-Steuersignal SL1-ALE, (SL2-ALE) gelegt. Diese ALE-Steuersignale M-ALE bzw. SL1-ALE, (SL2-ALE) werden beispielsweise über den Eingang IN5, (IN16) zum Decodierlogik-Baustein PAL2, (PAL3) und von dort an den Takteingang CIN17, (CIN18) des Einspeicherelementes 17, (18) weitergeleitet. Ausgangsseitig ist das Einspeicherelement 17, (18) zum Übertragen der Adressen mit dem niederwertigen Byteanteil über eine Busleitung B-MP2L, (B-MP3L) mit Low-Adreßeingängen AD0 des Schreib-/Lesespeichers RAM2, (RAM3) und des Decodierlogik-Bausteines PAL2, (PAL3) elektrisch verbunden.

Der Decodierlogik-Baustein PAL2, (PAL3) steht darüber hinaus über den Eingang IN6, (IN15), über den beispielsweise ein RD- bzw. WR-Steuersignal übertragen wird, mit der Peripherie des Subprozessorsystems SUB1, SUB2 in Verbindung. Parallel hierzu ist der Decodierlogik-Baustein PAL2, (PAL3) weiterhin noch über den Eingang 1N7, (IN14) zum Empfang des P̅S̅E̅N̅-Steuersignals M-P̅S̅E̅N̅ bzw. eines weiteren P̅S̅E̅N̅-Steuersignales SL1-P̅S̅E̅N̅, (SL2-P̅S̅E̅N̅) mit der Peripherie des Subprozessorsystems SUB1, SUB2 verbunden.

Wie der Decodierlogik-Baustein PAL2, (PAL3), so weist auch der Mikroprozessor MP2, (MP3) des Subprozessorsystems SUB1, SUB2 periphere Anschlüsse auf. So ist der Mikroprozessor MP2, (MP3) zur Übertragung des ALE-Steuersignales SL1-ALE, (SL2-ALE) über den Ausgang OUT4, (OUT9), zur Übertragung des P̅S̅E̅N̅-Steuersignales SL1-P̅S̅E̅N̅, (SL2-P̅S̅E̅N̅) über den Ausgang OUT3, (OUT8), mit dem I/O-Port P3.6 zur Ausgabe des WR-Steuersignales über den Ausgang OUT1, (OUT6) sowie mit dem I/O-Port P3.7 zur Übertragung des RD-Steuersignales über den Ausgang OUT2, (OUT7) mit der Peripherie des Subprozessorsystems SUB1, SUB2 galvanisch gekoppelt. Weiterhin ist der Mikroprozessor MP2, (MP3) an den Takteingang CLK und dem RESET-Eingang RES über den Eingang IN1, (IN9) bzw. IN3, (IN11) mit der Master-Prozessorarchitektur nach FIG 3 zusammengeschaltet.

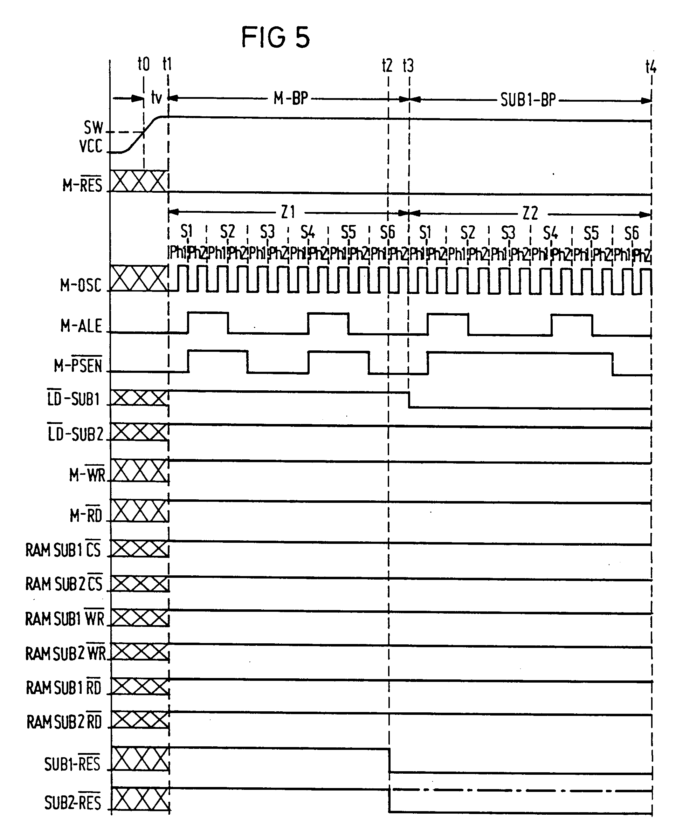

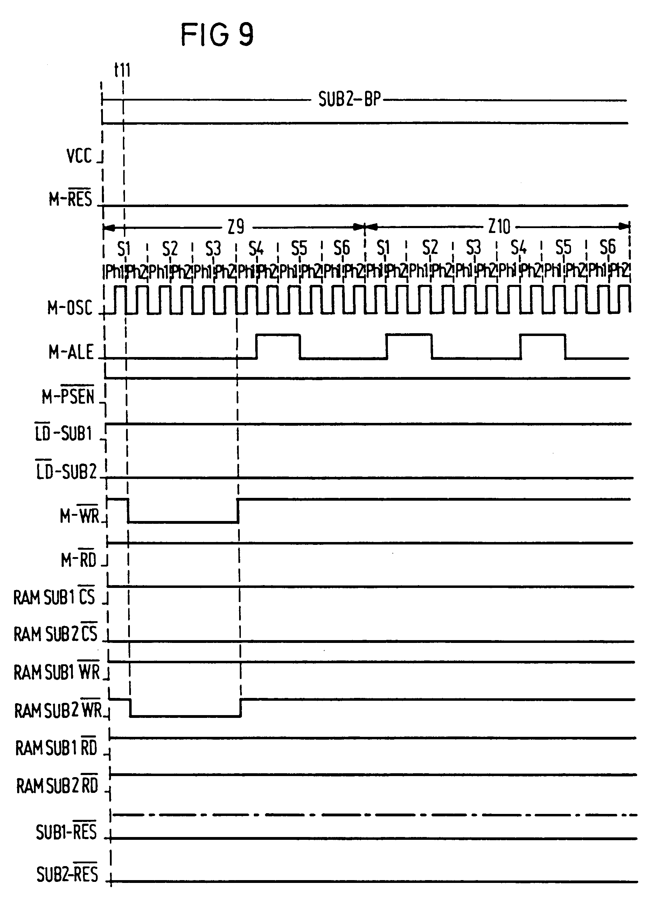

Die FIG 5 bis 10 zeigen in einer zeitlichen Aufeinanderfolge prinzipielle Funktionsabläufe des Multiprozessorsystems 2 gemäß der FIG 3 und 4. Dargestellt sind insbesondere diejenigen Funktionsabläufe, die erforderlich sind, um Programminformationen aus dem programmier-, löschbaren Festwertspeicher EPROM1 in den Schreib-/Lesespeicher RAM2 des Subprozessorsystems SUB1 bzw. in den Schreib-/Lesespeicher RAM3 des Subprozessorsystems SUB2 durch den als Master-Prozessor dienenden Mikroprozessor MP1 des Multiprozessorsystems 2 zu übertragen.

In FIG 5 sind dazu in einem ersten Abschnitt High/Low-Signalverläufe (y-Koordinate) über einer Zeit t (x-Koordinate) grafisch dargestellt. Bei den High/Low-Signalverläufen sind nur diejenigen dargestellt, die für das Übertragen der Programminformation innerhalb des Multiprozessorsystems 2 notwendig sind.

Nach dem Anlegen der Versorgungsspannung VCC/VSS an die Netzeingänge der in dem Multiprozessorsystem 2 enthaltenen elektronischen Bauelemente wird zu einem Zeitpunkt t0, bei dem ein Schwellenwert SW der Versorgungsspannung VCC/VSS erreicht ist, das Multiprozessorsystem 2 in Betrieb gesetzt. Mit einer zeitlichen Verzögerung tv wird daran anschließend der als Master-Prozessor dienende Mikroprozessor MP1 rückgesetzt. Das Rücksetzen erfolgt dabei durch ein low-aktives R̅E̅S̅E̅T̅-Signal M-R̅E̅S̅, das zum Zeitpunkt t0 + tv von einem "don't care-Zustand", beispielsweise wie im vorliegenden Fall einem High-Pegel, auf einen Low-Pegel abfällt. Mit dem Rücksetzen des Mikroprozessors MP1 wird gleichzeitig, wie in FIG 3 beschrieben, ein externes oder internes Taktsignal M-OSC mit einer Taktfrequenz von 12 MHz erzeugt. Das Taktsignal M-OSC steuert die Reihenfolge von Anweisungen, die der Mikroprozessor MP1 im Zusammenhang mit einer Operation erkennt und ausführt. Dazu ist das Taktsignal M-OSC in Maschinenzyklen Z1 ... Zi unterteilt. Für das vorliegende Ausführungsbeispiel ist das Taktsignal M-OSC in zwölf (i = 12) Maschinenzyklen Z1 ... Z12 zerlegt. Jeder Maschinenzyklus Z1 ... Z12 erstreckt sich über zwölf Taktperioden des Taktsignales M-OSC und enthält sechs Signalzustände S1 ... S6.

Der einzelne Signalzustand S1 ... S6 unterteilt sich ferner in eine Phase Ph1 und eine Phase Ph2, die jeweils eine Taktperiode des Taktsignales M-OSC repräsentieren. Somit läßt sich jede Taktperiode des Maschinenzyklus Z1 ... Z12 durch eine Kennzeichnung S1Ph1 (Signalzustand 1, Phase 1) ... S6Ph2 (Signalzustand 6, Phase 2) numerieren.

Wie schon bei der Beschreibung der FIG 3 erläutert, generiert der Mikroprozessor MP1 für externe Speicherzugriffe, beispielsweise dem Zugriff auf den programmier-, löschbaren Festwertspeicher EPROM1, das ALE-Steuersignal M-ALE. Dieses high-aktive ALE-Steuersignal M-ALE wird mit Ausnahme eines externen Datenspeicherzugriffs zweimal pro Maschinenzyklus Z1 ... Z12 aktiviert. Die High-Pegel des ALE-Steuersignals M-ALE liegen beispielsweise zu den Taktperioden S1Ph2 und S2Ph1 bzw. S4Ph2 und S5Ph1 an. Für den Fall, daß auf einen Datenspeicher zugegriffen wird, weist das ALE-Steuersignal M-ALE während der Taktperiode S1Ph2 und S2Ph1 einen Low-Pegel auf. Neben dem ALE-Steuersignal M-ALE generiert der Mikroprozessor MP1 insbesondere noch das low-aktive P̅S̅E̅N̅-Steuersignal M-P̅S̅E̅N̅. Dieses P̅S̅E̅N̅-Steuersignal M-P̅S̅E̅N̅ ist nur für externe Zugriffe auf einen Programmspeicher aktiviert. Der Zugriff erfolgt dabei zweimal pro Maschinenzyklus und unabhängig davon, ob das herbeigeholte Byte für einen nachfolgend auszuführenden Befehl benötigt wird. Die deaktiven High-Pegel des P̅S̅E̅N̅-Steuersignals M-P̅S̅E̅N̅ treten während eines Maschinenzyklus bei den Taktperioden von S1Ph2 bis S2Ph2 und S4Ph2 bis S5Ph2 auf. Ein kompletter Zyklus des P̅S̅E̅N̅-Steuersignals M-P̅S̅E̅N̅ mit einem aktiven und deaktiven Zeitabschnitt beträgt somit, wie beim ALE-Steuersignal M-ALE, sechs Taktperioden des Taktsignales M-OSC.

Damit der Mikroprozessor MP1, wie bei der Beschreibung der FIG 2 angedeutet, die Programminformation für die Subprozessorsysteme SUB1, SUB2 an diese übertragen kann, muß der als Master-Prozessor dienende Mikroprozessor MP1 mit den dafür notwendigen Informationen versorgt bzw. geladen werden. Um die Zeitachse t für die Darstellung dieses Ladevorganges nicht strecken zu müssen, ist das Laden (englisch: booten) des Mikroprozessors MP1 in einem Zeitintervall t3 - t1 nur prinzipiell wiedergegeben. Dieses im folgenden als Master-Boot Phase M-BP benannte Zeitintervall t3 - t1 erstreckt sich deshalb nur über den Maschinenzyklus Z1. Mit Ablauf der Taktperiode S6Ph2 des Maschinenzyklus Z1 ist nunmehr der Mikroprozessor MP1 für das Übertragen der Programminformation an das Subprozessorsystem SUB1, SUB2 betriebsbereit. Damit das Subprozessorsystem SUB1, SUB2 diese Programminformation auch übernehmen kann, muß es hierüber informiert und zur Übernahme veranlaßt werden. Dieses geschieht durch ein low-aktives R̅E̅S̅E̅T̅-Steuersignal SUB1-R̅E̅S̅, SUB2-R̅E̅S̅. So wird der Mikroprozessor MP2 des Subprozessorsystems SUB1 zu einem Zeitpunkt t2, beispielsweise während der Taktperiode S6Ph2 des Maschinenzyklus Z1, durch den Mikroprozessor MP1 über den Inverter 8 in einen definierten Ausgangszustand rückgesetzt. Gemäß der FIG 5 wird der Rücksetzbefehl gleichzeitig an den Mikroprozessor MP2 des Subprozessorsystems SUB1 und an den Mikroprozessor MP3 des Subprozessorsystems SUB2 zugeleitet. Alternativ ist es aber auch denkbar, die Rücksetzbefehle voneinander zeitlich zu entkoppeln, wie es in den FIG 5 bis 7 strichpunktiert dargestellt ist. Danach wird das Subprozessorsystem SUB2 erst zu einem Zeitpunkt t7 rückgesetzt.

Mit Beginn eines Maschinenzyklus Z2 wird nun während eines weiteren Zeitintervalls t8 - t3, das Subprozessorsystem SUB1 gemäß den Ausführungen zu FIG 3 mit Programminformationen aus dem programmier-, löschbaren Festwertspeicher EPROM1 geladen. Wie schon bei der Master-Boot Phase M-BP, so kann auch hier aus den gleichen Gründen nur ein begrenztes zeitliches Spektrum des Ladevorganges gemäß den Ausführungen zu FIG 3 für das Subprozessorsystem SUB1 dargestellt werden. Das im folgenden als Subprozessorsystem-Boot Phase SUB1-BP benannte Zeitintervall t8 - t3 erstreckt sich über fünf Maschinenzyklen Z2 ... Z7, die in der FIG 5 bis 8 dargestellt sind. Eingeleitet wird das Laden des Subprozessorsystems SUB1 durch ein entsprechendes low-aktives Ladesignal L̅D̅ - SUB1, das zum Zeitpunkt t3 von einem deaktiven High-Pegel auf einen aktiven Low-Pegel abfällt. Um den mit der Änderung des Signalzustandes verbundenen Ladebefehl ausführen zu können, muß es dem Mikroprozessor MP1 bekannt sein, wohin die nachfolgende Programminformation innerhalb des Subprozessorsystems SUB1 übertragen werden soll.

Der Ladebefehl enthält daher neben dem Operationscode (OP-Code) für die Operation "Laden des Subprozessorsystems SUB1" auch die Adresse, wohin die nachfolgende Programminformation übertragen werden soll. Im vorliegenden Fall bezeichnet diese Adresse einen Speicherplatz des peripheren Schreib-/Lesespeichers RAM2, auf den die Programminformation abgelegt werden soll. Als Schnittstelle zwischen einer Zentraleinheit CPU des Mikroprozessors MP1 und dem Schreib-/Lesespeicher RAM2 dient dabei der I/O-Port P0, P2, über den die Adressierung vorgenommen wird. Man bezeichnet daher Adressen, die über einen I/O-Port eines Mikroprozessors an dessen Peripherie ausgegeben werden, auch als Portadressen. Soll, wie im vorliegenden Fall, beispielsweise eine 16-bit Portadresse übertragen werden, so wird der höherwertige Byteanteil über den I/O-Port P2 auf der Busleitung B-MP1H und der niederwertige Byteanteil über den I/O-Port P0 auf der Busleitung B-MP1 übertragen. Die Portadresse mit dem höherwertigen Byteanteil gelangt über den BUS-Eingang BIN1 des Subprozessorsystems SUB1 an den Treiberbaustein 11, während die Portadresse mit dem niederwertigen Byteanteil über den BUS-Eingang BIN2 des Subprozessorsystems SUB1 zunächst an das Einspeicherelement 13 gelegt wird.

Zur Übernahme und Weitergabe der Portadresse werden nun sowohl das Einspeicherelement 13 als auch der Treiberbaustein 11 während des Taktperioden-Intervalls S1Ph2 ... S4Ph1 mittelbar durch das ALE-Steuersignal M-ALE gesteuert. Die mittelbare Steuerung erfolgt dabei über den Decodierlogik-Baustein PAL1, der eingangsseitig das ALE-Steuersignal M-ALE empfängt und ausgangsseitig über den Eingang IN4 des Subprozessorsystems SUB1 das Einspeicherelement 13 bzw. über den Eingang IN8 des Subprozessorsystems SUB1 den Treiberbaustein 11 steuert. Während der High-Phase des ALE-Steuersignals M-ALE wird die Portadresse von dem Einspeicherelement 13 bzw. dem Treiberbaustein 11 übernommen und während der Low-Phase des ALE-Steuersignals M-ALE wird der höherwertige Byteanteil der Portadresse auf der Busleitung B-MP2H und der niederwertige Byteanteil der Portadresse auf der Busleitung B-MP2L weitergegeben. Nach Ablauf der Taktperiode S4P1 liegt somit der höherwertige Byteanteil der Portadresse sowohl an den Adreßeingängen AD1 des Decodierlogik-Bausteines 12 und des Schreib-/Lesespeichers RAM2 als auch an dem I/O-Port P2 des Mikroprozessors MP2 an. Zum gleichen Zeitpunkt liegt der niederwertige Byteanteil der Portadresse an dem Einspeicherelement 17 und an dem I/O-Port P0 des Mikroprozessors MP2 an.

Damit der niederwertige Byteanteil nun auch an den Adreßeingang AD0 des Decodierlogik-Bausteins PAL2 und des Schreib-/Lesespeichers RAM2 anliegt, ist wiederum eine zweifache Zustandsänderung des ALE-Steuersignals M-ALE erforderlich. Ist zu einem Zeitpunkt t4 des Maschinenzyklus Z2 die gesamte Portadresse an den Schreib-/Lesespeicher RAM2 übergeben worden, so wird dieser durch ein C̅S̅-Steuersignal RAMSUB1C̅S̅, das von dem Decodierlogik-Baustein PAL1 über den Eingang IN2 dem Subprozessorsystem SUB1 zugeführt wird, für nachfolgende Schreib- und Lesevorgänge freigegeben. Mit diesem C̅S̅-Steuersignal RAMSUB1C̅S̅, das zum Zeitpunkt t4 von einem deaktiven High-Pegel auf einen aktiven Low-Pegel abfällt, kann auf den Schreib-/Lesespeicher RAM2 im X-, Y-Adressierverfahren (englisch: two dimensional adressing) zugegriffen werden.

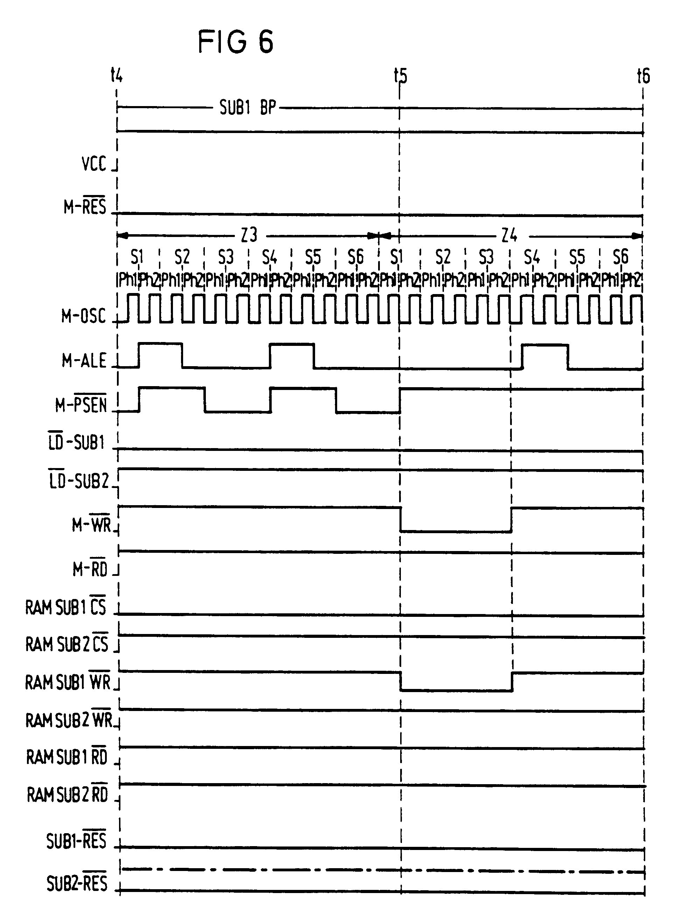

In FIG 6 ist dazu in Zeitfolge zur FIG 5 der zeitliche Verlauf eines Schreibvorganges dargestellt. Während eines Maschinenzyklus Z3 greift der Mikroprozessor MP1 in dem Taktperioden-Intervall S2Ph2 ... S4Ph1, in dem das P̅S̅E̅N̅-Steuersignal M-P̅S̅E̅N̅ aktiv ist, auf den programmier-, löschbaren Festwertspeicher EPROM1 zu. Dazu wird zunächst in dem Taktperioden-Intervall S1Ph2 ... S2hP1 des Maschinenzyklus Z3 die am I/O-Port P0 ausgegebene Low-Adresse des Zugriffbefehls durch das ALE-Steuersignal M-ALE in das Einspeicherelement 17 bis zur nächsten Änderung des Signalzustandes zwischengespeichert. Mit Beginn der Taktperiode S2Ph2 wird diese Low-Adresse bis zum Ende der Taktperiode S4Ph1 über die Busleitung B-MP12 an die Low-Adreßeingänge AD0 des Decodierlogik-Bausteins PAL1 und des programmier-, löschbaren Festwertspeichers EPROM1 gelegt. Dadurch, daß das P̅S̅E̅N̅-Steuersignal M-P̅S̅E̅N̅ stets an den Decodierlogik-Baustein PAL1 anliegt, wird mit Beginn der Taktperiode S3Ph1 das CS-Steuersignal CS-ST an den programmier-, löschbaren Festwertspeicher EPROM1 gelegt. Mit diesem CS-Steuersignal CS-ST kann ebenfalls auf den programmier-, löschbaren Festwertspeicher EPROM1 im X-, Y-Adressierverfahren zugegriffen werden.

Im weiteren Verlauf des Taktperioden-Intervalls S3Ph1 ... S4Ph1 wird nun die Programminformation gemäß der eingegebenen Low- und High-Adresse aus dem programmier-, löschbaren Festwertspeicher EPROM1 ausgelesen und über die Busleitung B-MP1 zum Subprozessorsystem SUB1 weitergeleitet. Während des Taktperioden-Intervalls S4Ph2 ... S5Ph1 des Maschinenzyklus Z3 wird diese Programminformation durch das ALE-Steuersignal M-ALE in das Einspeicherelement 13 bis zur nächsten Änderung des Signalzustandes zwischengespeichert. Das ALE-Steuersignal M-ALE dient dabei als Taktsignal und wird über den Decodierlogik-Baustein PAL1 dem Einspeicherelement 13 zugeführt. Damit die mit Ablauf des Maschinenzyklus Z3 an dem Dateneingang DT des Schreib-/Lesespeichers RAM2 anliegende Programminformation nun auf den adressierten Speicherplatz des Schreib-/Lesespeichers RAM2 abgelegt werden kann, wird von dem Mikroprozessor MP1 mit Beginn der Taktperiode S1Ph2 eines Maschinenzyklus Z4 der Schreibvorgang ausgelöst.

Dieser Schreibvorgang beginnt damit, daß der I/O-Port P3.6 zu einem Zeitpunkt t5 von einem High- auf einen Low-Pegel eines Schreibsignales M-W̅R̅ gelegt wird. Dieses Schreibsignal M-W̅R̅ wird nun gleichzeitig sowohl dem Multiplexer M1 als auch dem Decodierlogik-Baustein PAL1 zugeleitet. Damit der in dem Schreibsignal M-W̅R̅ enthaltene Schreibbefehl an den Schreib-/Lesespeicher RAM2 des Subprozessorsystems SUB1 weitergegeben werden kann, wird sowohl der Multiplexer M1 als auch der Decodierlogik-Baustein PAL1 über den I/O-Port P5.0 des Mikroprozessors MP1 freigegeben bzw. gesteuert. Die Freigabe des Multiprozessors M1 erfolgt dabei über einen Enable-Eingang ENM1. In Abhängigkeit von dem Steuersignal auf der Verbindungsleitung zwischen dem I/O-Port P5.0 und dem Enable-Eingang ENM1 wird von dem Multiplexer M1 über einen der Eingänge IN5, IN6, IN7 des Subprozessorsystems SUB1 ein weiteres Schreibsignal RAMSUB1W̅R̅ abgegeben. Mit diesem Schreibsignal RAMSUB1W̅R̅, das beispielsweise wie im vorliegenden Fall ebenfalls zum Zeitpunkt t5 von einem High-Pegel auf einen Low-Pegel abfällt, wird der Schreib-/Lesespeicher RAM2 über den Decodierlogik-Baustein PAL2 für den Schreibvorgang freigegeben.

Nach diesen fünf Taktperioden ist die Programminformation vollständig auf den adressierten Speicherplatz des Schreiblesespeichers RAM2 abgelegt. Gemäß den Ausführungen zu FIG 2 ist es nun wichtig zu wissen, ob die übertragene Programminformation vollständig und richtig in den Schreiblesespeicher RAM2 eingeschrieben worden ist.

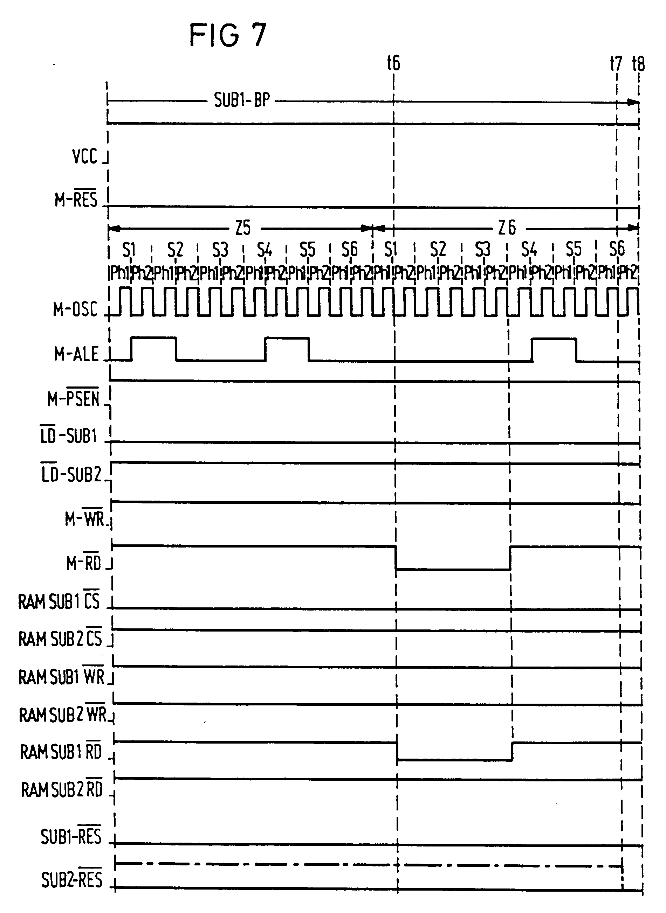

Die FIG 7 zeigt dazu in Zeitfolge zu FIG 6 den zeitlichen Verlauf eines Lesevorganges. Damit dieser Lesevorgang ausgeführt werden kann, muß wie beim Schreibvorgang zunächst der Speicherplatz des Schreib-/Lesespeichers RAM2, auf den die zu lesende Programminformation abgelegt ist, adressiert werden. Der dafür vorgesehene zeitliche Verlauf des ALE-Steuersignals M-ALE und des P̅S̅E̅N̅-Steuersignals M-P̅S̅E̅N̅ während des Taktperioden-Intervalls S1Ph2 ... S5Ph2 eines Maschinenzyklus Z5 entspricht dem des gleichen Taktperioden-Intervalls S1Ph2 ... S5Ph2 des Maschinenzyklus Z2. Nachdem der entsprechende Speicherplatz des Schreib/Lesespeichers RAM2 adressiert worden ist, wird von dem Mikroprozessor MP1 mit Beginn der Taktperiode S1Ph2 eines Maschinenzyklus Z6 der Lesevorgang ausgelöst.

Der Lesevorgang beginnt damit, daß der I/O-Port P3.7 zu einem Zeitpunkt t6 von einem High- auf einen Low-Pegel eines Lesesignals M-R̅D̅ gelegt wird. Dieses Lesesignal M-R̅D̅ wird nun gleichzeitig sowohl dem Multiplexer M1 als auch dem Decodierlogik-Baustein PAL1 zugeleitet. Damit der in dem Lesesignal M-RD enthaltene Lesebefehl an den Schreib-/Lesespeicher RAM2 des Subprozessorsystems SUB1 weitergegeben werden kann, wird sowohl der Multiplexer M1 als auch der Decodierlogik-Baustein PAL1 über den I/O-Port P5.0 des Mikroprozessors MP1 freigegeben bzw. gesteuert. Die Freigabe des Multiprozessors M1 erfolgt dabei, wie beim Schreibvorgang, über den Enable-Eingang ENM1. Auch hier wird von dem Multiplexer M1 in Abhängigkeit von dem Steuersignal auf der Verbindungsleitung zwischen dem I/O-Port P5.0 und dem Enable-Eingang ENM1 über einen der Eingänge IN5, IN6, IN7 des Subprozessorsystems SUB1 ein weiteres Lesesignal RAMSUB1R̅D̅ abgegeben. Mit diesem Lesesignal RAMSUB1R̅D̅ das beispielsweise wie im vorliegenden Fall, ebenfalls zum Zeitpunkt t6 von einem High-Pegel auf einen Low-Pegel abfällt, wird der Schreib-/Lesespeicher RAM2 über den Decodierlogik-Baustein PAL2 für den Lesevorgang aufgesteuert. Die low-aktive Zeitspanne der Lesesignale M-R̅D̅, RAMSUB1R̅D̅ erstreckt sich über fünf Taktperioden des Maschinenzyklus Z6.

Nach diesen fünf Taktperioden ist die abgespeicherte Programminformation vollständig ausgelesen und dem Einspeicherelement 17 über die Busleitung B-MP2 zugeführt. Damit diese ausgelesene Programminformation über die Busleitung B-MP1 zum I/O-Port P0 des Mikroprozessors MP1 gelangt, wird die Programminformation in dem Einspeicherelement 15 im Taktperioden-Intervall S4Ph2 ... S5Ph1 des Maschinenzyklus Z6 durch die positive Flanke des ALE-Steuersignals M-ALE zwischengespeichert und bei der negativen Flanke des ALE-Steuersignals M-ALE wieder freigegeben. Liegt nun mit Ablauf der Taktperiode S5Ph1 des Maschinenzyklus Z6 die ausgelesene Programminformation an dem I/O-Port P0 des Mikroprozessors MP1 an, so wird die während des Maschinenzyklus Z4 eingeschriebene Programminformation mit der während des Maschinenzyklus Z6 ausgelesenen Programminformation in dem Mikroprozessor MP1 verglichen.

Da die hierfür notwendigen zeitlichen Funktionsabläufe eines Mikroprozessors bekannt sind, wird auf deren Darstellung und Beschreibung an dieser Stelle verzichtet. Ist nun beispielsweise das Vergleichsergebnis negativ, d. h. die geschriebene Programminformation stimmt mit der rückgelesenen Programminformation aufgrund von Übertragungsfehlern bzw. systematischen Fehlern nicht überein, so wird ein neuer Übertragungszyklus mit einem Schreib- und Lesevorgang gestartet. Die Anzahl dieser Übertragungszyklen kann daher beliebig groß sein. Es ist jedoch, nicht zuletzt aus praktischen Gründen, zweckmäßig, nach einer gewissen Anzahl von erfolglosen Übertragungszyklen, beispielsweise drei, den Übertragungsvorgang abzubrechen. In diesem Fall meldet dann der Mikroprozessor MP1, daß das ganze Multiprozessorsystem 2 arbeitsunfähig ist. Ist hingegen das Vergleichsergebnis positiv, d. h. die geschriebene Programminformation stimmt mit der rückgelesenen Programminformation überein, so wird, wenn keine weiteren Programminformationen übertragen werden sollen, der Ladevorgang beendet.

Im vorliegenden Fall wird zu einem Zeitpunkt t8 das zum Zeitpunkt t3 in FIG 5 aktivierte low-aktive Ladesignal L̅D̅-SUB1 für das Subprozessorsystem SUB1 deaktiviert. Mit diesem Ladesignal L̅D̅-SUB1 wird auch gleichzeitig das ebenfalls low-aktive C̅S̅-Steuersignal RAMSUB1C̅S̅ deaktiviert.

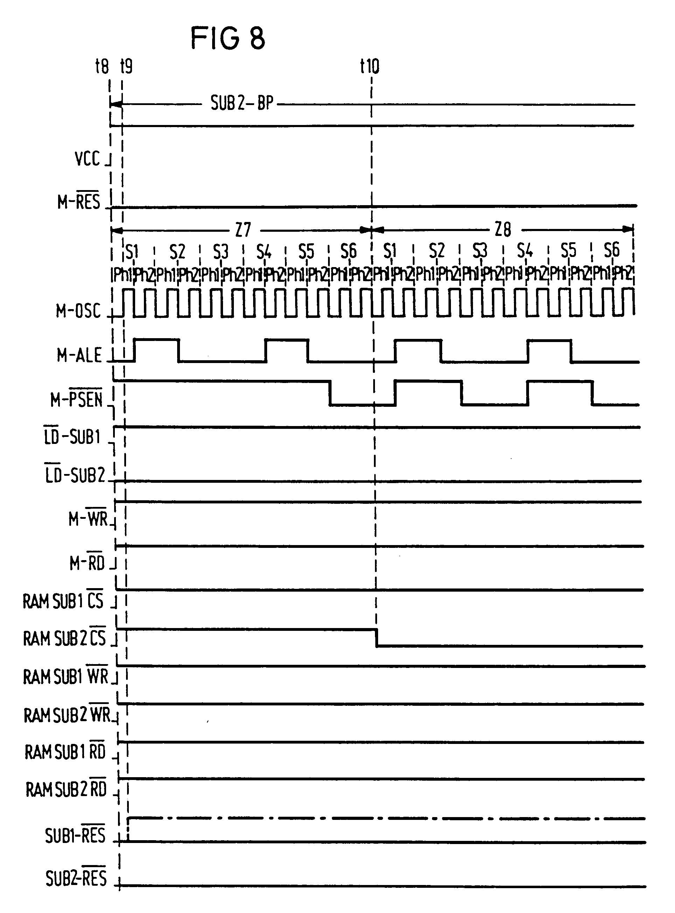

Nach Ablauf des Maschinenzyklus Z6 kann nun damit begonnen werden, das Subprozessorsystem SUB2 ebenfalls mit Programminformationen aus dem programmier-, löschbaren Festwertspeicher EPROM1 zu laden. Dazu wird ein entsprechendes, ebenfalls low-aktives Ladesignal L̅D̅-SUB2 zum Zeitpunkt t8 aktiviert. Wie schon bei der Master-Boot Phase M-BP und der Subprozessorsystem-Boot Phase SUB1-BP, so kann auch hier aus den gleichen Gründen nur ein begrenztes zeitliches Spektrum des Ladevorganges gemäß den Ausführungen zu FIG 2 für das Subprozessorsystem SUB2 dargestellt werden. Das im folgenden als Subprozessorsystem-Boot Phase SUB2-BP benannte Zeitintervall t13 - t8 erstreckt sich ebenfalls über fünf Maschinenzyklen Z7 ... Z12, die in der FIG 8 bis 10 dargestellt sind.

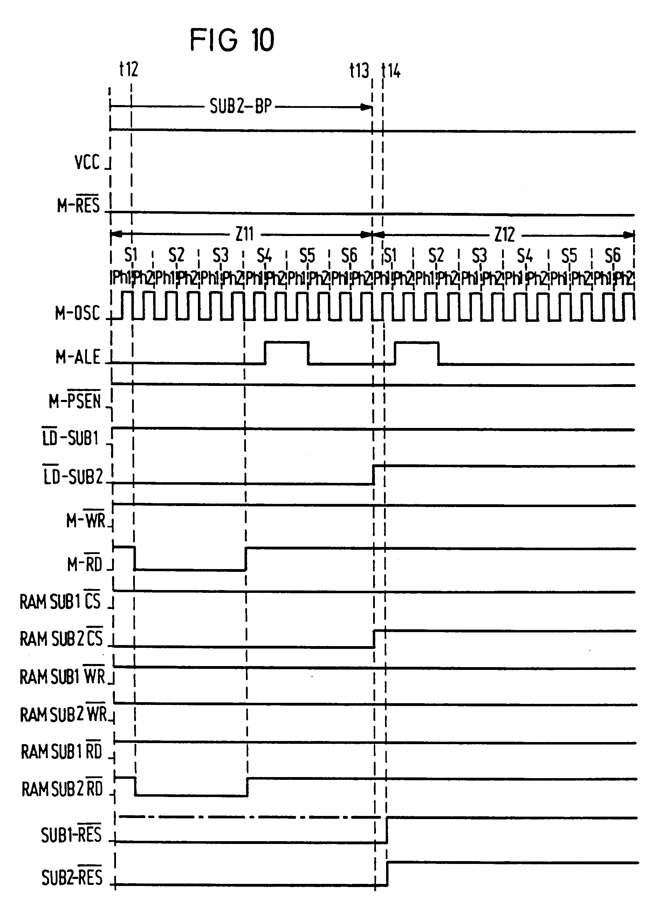

In FIG 8 ist dazu in Zeitfolge zu FIG 7 der zeitliche Verlauf eines Übertragungszyklus, dem Schreiben und Lesen einer Programminformation für das Subprozessorsystem SUB2 dargestellt. Bevor dieser Übertragungszyklus einsetzt, wird für den Fall, daß die Subprozessorsysteme SUB1, SUB2 asynchron betrieben werden sollen, das bereits geladene Subprozessorsystem SUB1 beispielsweise zu einem Zeitpunkt t9 wieder freigeben. In FIG 8 ist dazu strichpunktiert dargestellt, wie das low-aktive RESET-Steuersignal SUB1-R̅E̅S̅ von einem Low-Pegel auf einen High-Pegel ansteigt. Mit dem Anlegen des Ladesignals L̅D̅-SUB2 an das rückgesetzte Subprozessorsystem SUB2 wird nunmehr, wie beim Subprozessorsystem SUB1, die für das Subprozessorsystem SUB2 bestimmte Programminformation in den Schreib/Lesespeicher RAM3 eingeschrieben und rückgelesen. Da sich bis auf die Bezeichnung der hierfür in FIG 8 bis 10 dargestellten Signalverläufe nichts ändert, sind die Ausführungen zum Ladevorgang des Subprozessorsystems SUB1 entsprechend zu übernehmen. In FIG 10 ist darüber hinaus dargestellt, wie beide Subprozessorsysteme SUB1, SUB2 zu einem zeitpunkt t14 durch Deaktivieren der RESET-Steuersignale SUB1-R̅E̅S̅, SUB2-R̅E̅S̅ gleichzeitig freigegeben werden. Dies ist dann der Fall, wenn die Subprozessorsysteme SUB1, SUB2 synchron betrieben werden sollen.

In FIG 11 ist gezeigt, wie das Multiprozessorsystem 2 über einen Signalleitungsbus 20, der die Signalleitungen SLX, SLY umfaßt, mit Elementen einer Teilfunktionseinheit einer Druckeinrichtung 19, beispielsweise eines nichtmechanischen Druckers, verbunden ist. Eine solche Druckeinrichtung 19 ist aus der US-A-4,465,357 bekannt.

Bei den Elementen der Teilfunktionseinheit der Druckeinrichtung 19 handelt es sich um eine Leistungsplatine 190 für die Schrittmotorik, eine Leistungsplatine 191 für die Netzverbraucher und eine Leistungsplatine 192 für die Heizersteuerung. Die Leistungsplatine 190 für die Schrittmotorik ist dabei ausgangsseitig mit Schrittmotoren 193 elektrisch verbunden. Die Leistungsplatine 191 für die Netzverbraucher hingegen ist ausgangsseitig mit einem Wechselstrommotor 194, einem Drehstrommotor 195 und einem Magnetventil 196 zusammengeschaltet. Die Leistungsplatine 192 für die Heizersteuerung ist ausgangsseitig mit Heizstrahlern 197 elektrisch gekoppelt. Der Heizstrahler 197 besteht dabei aus einer Vielzahl von Lichtelementen, beispielswiese LED's, die in einer Reihe angeordnet, Bestandteil eines Zeichengenerators der Druckeinrichtung 19 sind. Ein solcher Zeichengenerator der Druckeinrichtung 19 ist aus der PCT/DE 88/00465 bekannt.

### Bezugszeichenliste

- 1: Multiprozessorsystem (üblicher Aufbau)
- 2: Multiprozessorsystem (gemäß Erfindung)
- 3: RESET-Steuerbaustein
- 4: Taktgeber
- 5: serieller Kommunikationssteuerbaustein
(HSCC = High-Level Serial Communications Controller)
- 6, 9, 10: I/O-Port-Baustein
- 7, 13 - 18: Einspeicherelement (Latch)
- 8: Inverter
- 11, 12: Treiberbaustein (Driver)
- 19: Druckeinrichtung (nichtmechanischer Drucker)
- 20: Signalleitungsbus
- 190: Leistungsplatine für die Schrittmotorik
- 191: Leistungsplatine für die Netzverbraucher
- 192: Leistungsplatine für die Heizersteuerung
- 193: Schrittmotor
- 194: Wechselstrommotor
- 195: Drehstrommotor
- 196: Magnetventil
- 197: Heizstrahler
- AD1: High-Adreßeingang
- AD0: Low-Adreßeingang
- ALE: Ausgang (Adress Latch Enable)
- B: Bussystem
- BIN1: Buseingang des Subprozessorsystems SUB1 zum Treiberbaustein 11
- BIN2: Buseingang des Subprozessorsystems SUB1 zum Einspeicherelement 13, 15
- BIN3: Buseingang des Subprozessorsystems SUB2 zum Treiberbaustein 12
- BIN4: Buseingang des Subprozessorsystems SUB2 zum Einspeicherelement 14, 16
- B-MP1: Busleitung des Mikroprozessors MP1 zur Übertragung von Daten und Adressen mit einem niederwertigen Byteanteil
- B-MP1H: Busleitung des Mikroprozessors MP1 zur Übertragung von Adressen mit einem höherwertigen Byteanteil
- B-MP1L: Busleitung des Mikroprozessors MP1 zur Übertragung von Adressen mit einem niederwertigen Byteanteil
- B-MP2: Busleitung des Mikroprozessors MP2 zur Übertragung von Daten und Adressen mit einem niederwertigen Byteanteil
- B-MP2H: Busleitung des Mikroprozessors MP2 zur Übertragung von Adressen mit einem höherwertigen Byteanteil
- B-MP2L: Busleitung des Mikroprozessors MP2 zur Übertragung von Adressen mit einem niederwertigen Byteanteil
- B-MP3: Busleitung des Mikroprozessors MP3 zur Übertragung von Daten und Adressen mit einem niederwertigen Byteanteil
- B-MP3H: Busleitung des Mikroprozessors MP3 zur Übertragung von Adressen mit einem höherwertigen Byteanteil
- B-MP3L: Busleitung des Mikroprozessors MP3 zur Übertragung von Adressen mit einem niederwertiten Byteanteil
- CIN7: Takteingang des Einspeicherelementes 7
- CIN17: Takteingang des Einspeicherelementes 17
- CIN18: Takteingang des Einspeicherelementes 18
- CLK: Takteingang
- CPU: Zentraleinheit des Mikroprozessors MP1 ... MPn
- CS: Eingang (Chip Select)
- CS-ST: CS-Steuersignal (Chip Select-Steuersignal)
- DT: Dateneingang des Schreib-/Lesespeicher RAM1 ... RAMn
- ENM1: Enable-Eingang des Multiplexers M1
- ENM2: Enable-Eingang des Multiplexers M2
- EPROM1 ... EPROMn: programmier-, löschbarer Festwertspeicher
- IN1: Takteingang des Subprozessorsystems SUB1
- IN2, IN4, IN8: Eingänge des Subprozessorsystems SUB1 zum Decodierlogik-Baustein PAL1
- IN3: Eingang des Subprozessorsystems SUB1 zum Inverter 8
- IN5 ... IN7: Eingänge des Subprozessorsystems SUB1 zum Multiplexer M1
- IN9: Takteingang des Subprozessorsystems SUB2
- IN10, IN12, IN13: Eingänge des Subprozessorsystems SUB2 zum Decodierlogik-Baustein PAL1
- IN11: Eingang des Subprozessorsystems SUB2 zum Inverter 8
- IN14 ... IN16: Eingänge des Subprozessorsystems SUB2 zum Multiplexer M2
- L̅D̅-SUB1: Ladesignal des Subprozessorsystems SUB1
- L̅D̅-SUB2: Ladesignal des Subprozessorsystems SUB2
- M1 ... Mn: Multiplexer
- M-ALE: ALE-Steuersignal des Master-Prozessors M
- M-BP: Boot-Phase des Master-Prozessors M
- M-OSC: Taktsignal des Master-Prozessors M
- MP1: Mikroprozessor (Master-Prozessor = M)
- MP2 ... MPn: Mikroprozessor (Slave-Prozessor = SL)
- M-P̅S̅E̅N̅: P̅S̅E̅N̅-Steuersignal des Master-Prozessors M
- M-R̅D̅: Lesesignal des Master-Prozessors M
- M-R̅E̅S̅: R̅E̅S̅E̅T̅-Signal des Master-Prozessors M
- M-W̅R̅: Schreibsignal des Master-Prozessors M
- OUT1 ... OUT4: Ausgänge des Subprozessorsystems SUB1 zum Multiplexer M1
- OUT5: Ausgang des Subprozessorsystems SUB1 zum Decodierlogik-Baustein PAL1
- OUT6 ... OUT9: Ausgänge des Subprozessorsystems SUB2 zum Multiplexer M2
- OUT10: Ausgang des Subprozessorsystems SUB2 zum Decodierlogik-Baustein PAL1
- P0 ... P5: 8-Bit-I/O-Ports
- P3.6, P3.7: sechste Bit des I/O-Ports P3 für den Schreibvorgang WR, siebte Bit des I/O-Ports P3 für den Lesevorgang RD
- P5.0, P5.1, P5.2: nullte, erste, zweite Bit des I/O-Ports P5
- PAL1 ... PALn: Decodierlogik-Baustein (Programmable Array Logic)
- Ph1, Ph2: Phase 1, Phase 2 des Signalzustandes S1 ... S6
- PSEN: Ausgang (Programm Store Enable)
- PX0: I/O-Port des I/O-Port-Bausteins 6
- PX1: I/O-Port des I/O-Port-Bausteins 9, 10
- PY: I/O-Port des seriellen Kommunikationssteuerbausteins
- RAM1 ... RAMn: Schreib-/Lesespeicher
- RAMSUB1C̅S̅: C̅S̅-Steuersignal für den Schreib-/Lesespeicher RAM2 des Subprozessorsystems SUB1
- RAMSUB2C̅S̅: C̅S̅-Steuersignal für den Schreib-/Lesespeicher RAM3 des Subprozessorsystems SUB2
- RAMSUB1R̅D̅: Lesesignal für den Schreib-/Lesespeicher RAM2 des Subprozessorsystems SUB1
- RAMSUB2R̅D̅: Lesesignal für den Schreib-/Lesespeicher RAM3 des Subprozessorsystems SUB2
- RAMSUB1W̅R̅: Schreibsignal für den Schreib-/Lesespeicher RAM2 des Subprozessorsystems SUB1
- RAMSUB2W̅R̅: Schreibsignal für den Schreib-/Lesespeicher RAM3 des Subprozessorsystems SUB2
- RES: RESET-Eingang
- RD: Schreibvorgang
- S1 ... S6: Signalzustand des Maschinenzyklus Z1 ... Z12
- SL1-ALE: ALE-Steuersignal des Slave-Prozessors SL1
- SL2-ALE: ALE-Steuersignal des Slave-Prozessors SL2
- SL1-P̅S̅E̅N̅: P̅S̅E̅N̅-Steuersignal des Slave-Prozessors SL1
- SL2-P̅S̅E̅N̅: P̅S̅E̅N̅-Steuersignal des Slave-Prozessors SL2
- SLA: Signalleitung des I/O-Port-Bausteins 6
- SLB: Signalleitung des Subprozessorsystems SUB1 (des I/O-Port-Bausteins 9)
- SLC: Signalleitung des Subprozessorsystems SUB2 (des I/O-Port-Bausteins 10)
- SLX: Signalleitung des Subprozessorsystems SUB1 (des Mikroprozessors MP2)
- SLY: Signalleitung des Subprozessorsystems SUB2 (des Mikroprozessors MP3)
- SUB1 ... SUBm: Subprozessorsystem
- SUB1-BP: Boot-Phase des Subprozessorsystems SUB1
- SUB2-BP: Boot-Phase des Subprozessorsystems SUB2
- SUB1-R̅E̅S̅: R̅E̅S̅E̅T̅-Steuersignal des Subprozessorsystems SUB1
- SUB2-R̅E̅S̅: R̅E̅S̅E̅T̅-Steuersignal des Subprozessorsystems SUB2
- SW: Schwellenwert der Versorgungsspannung VCC/VSS
- TPL: Zweidrahtleitung (Twisted Pair-Leitung)
- VCC: positiver Netzeingang ("+"-Pol)
- VCC/VSS: Versorgungsspannung
- VSS: negativer Netzeingang (Masse)
- WR: Schreibvorgang
- Z1 ... Z12: Maschinenzyklus des Taktsignals M-OSC
- n, m, i: Laufparameter
- t: Zeit
- t0 ... t14: Zeitpunkt
- tv: zeitliche Verzögerung

## Patentansprüche

1. Multiprozessorsystem mit einem Mikroprozessor (MP1), einem dem Mikroprozessor (MP1) zugeordneten Festwertspeicher (EPROM1) sowie mehreren Subprozessorsystemen (SUB1 ... SUBm) mit zugehörigen Schreib/Lesespeichern (RAM2 . .. RAMn), die zum Übertragen von Programminformation über ein Bussystem (B) miteinander verbunden sind, wobei die Programminformation sowohl für den Mikroprozessor (MP1) als auch für die Subprozessorsysteme (SUB1 ... SUBm) in dem Festwertspeicher (EPROM1) gespeichert ist und mit Mitteln (MP1, PAL1 ... PALn) um bei einem Schreibvorgang (WR) ausgehend von dem Mikroprozessor (MP1) die Programminformation dem Subprozessorsystem (SUB1 ... SUBm) zu übertragen und dort zu speichern, **gekennnzeichnet durch:**
a) Mittel (MP1, PAL1 ... PALn) um nach der Übertragung in einem Lesevorgang (RD) die gespeicherte Programminformation in dem Subprozessorsystem (SUB1 ... SUBm) rückzulesen,
b) Mittel (MP1, PAL1 ... PALn) um die dem Subprozessorsystem (SUB1 ... SUBm) übertragene Programminformation mit der aus dem Subprozessorsystem (SUB1 ... SUBm) rückgelesenen Programminformation zu vergleichen und um in Abhängigkeit vom Vergleichsergebnis das Subprozessorsystem (SUB1 ... SUBm) freizugeben oder im Fehlerfall den Schreib/Lesevorgang (WR, RD) zu wiederholen und durch
c) Mittel (MP1) um nach einer vorgegebenen Anzahl von fehlerhaften Schreib/Lesevorgängen (WR, RD) die Arbeitsunfähigkeit des Multiprozessorsystems festzustellen und zu melden.

2. Multiprozessorsystem nach Anspruch 1, **dadurch gekennzeichnet,** daß die Subprozessorsysteme (SUB1 ... SUBm) weitere Mikroprozessoren (MP2 ... MPn), die Schreib/ Lesespeicher (RAM2 ... RAMn) und die Mittel (PAL2 ... PALn) enthalten.

3. Multiprozessorsystem nach Anspruch 2, **dadurch gekennzeichnet,** daß die Mittel (PAL2 ... PALn) die Schreib/Lesespeicher (RAM2 ... RAMn) derart ansteuern, daß die Schreib/Lesespeicher (RAM2 ... RAMn) jeweils zwei getrennte, nicht gegenseitig überschreibbare Speicherbereiche aufweisen, von denen der eine Speicherbereich für Daten und der andere Speicherbereich für die Programminformationen vorgesehen ist.

4. Multiprozessorsystem nach Anspruch 2**, dadurch gekennzeichnet,** daß die Mittel (PAL2 ... PALn) als Decodierlogik-Bausteine ausgebildet sind.

5. Multiprozessorsystem nach einem der Ansprüche 1 bis 4, **dadurch gekennzeichnet,** daß das Multiprozessorsystem (2) einen weiteren Schreib-/Lesespeicher (RAM1) enthält, der über das Bussystem (B) dem Mikroprozessor (MP1) zugeordnet ist und in dem die Programminformation für den Mikroprozessor (MP1) speicherbar ist.

6. Multiprozessorsystem nach Anspruch 5**,dadurch gekennzeichnet,** daß die Mittel (PAL1) als Decodierlogik-Baustein ausgebildet sind, der die Speicherorganisation des weiteren Schreib/Lesespeichers (RAM1) durchführt.

7. Multiprozessorsystem nach einem der Ansprüche 1 bis 6, **dadurch gekennzeichnet,** daß die Mikroprozessoren (MP2 ... MPn) der Subprozessorsysteme (SUB1 ... SUBm) im Unterordnungsverhältnis zum als Master-Prozessor dienenden Mikroprozessor (MP1) als Slave-Prozessoren ausgebildet sind.

8. Multiprozessorsystem nach einem der Ansprüche 1 bis 7, **dadurch gekennzeichnet,** daß das Multiprozessorsystem (2) zur Steuerung von Funktionsabläufen und -einheiten in Druckeinrichtungen (19) vorgesehen ist.

## Claims

1. Multiprocessor system having a microprocessor (MP1), a read-only memory (EPROM1) assigned to the microprocessor (MP1), and also a plurality of subprocessor systems (SUB1 ... SUBm) with associated read-write memories (RAM2 ... RAMn) which are connected to one another via a bus system (B) for the transfer of program information, the program information both for the microprocessor (MP1) and for the subprocessor systems (SUB1 ... SUBm) being stored in the read-only memory (EPROM1), and having means (MP1, PAL1 ... PALn) of transferring the program information during a write operation (WR), starting from the microprocessor (MP1), to the subprocessor system (SUB1 ... SUBm) and storing it there,
characterized by
a) means (MP1, PAL1 ... PALn) of reading back the stored program information in the subprocessor system (SUB1 ... SUBm) in a read operation (RD) after the transfer,
b) means (MP1, PAL1 ... PALn) of comparing the program information transferred to the subprocessor system (SUB1 ... SUBm) with the program information read back from the subprocessor system (SUB1 ... SUBm) and of releasing the subprocessor system (SUB1 ... SUBm) depending on the result of the comparison or repeating the write-read operation (WR, RD) in the event of an error, and by
c) means (MP1) of detecting and of reporting the inoperability of the multiprocessor system after a predetermined number of faulty write-read operations (WR, RD).

2. Multiprocessor system according to Claim 1, characterized in that the subprocessor systems (SUB1 ... SUBm) contain further microprocessors (MP2 ... MPn), the read-write memories (RAM2 ... RAMn) and the means (PAL2 ... PALn).

3. Multiprocessor system according to Claim 2, characterized in that the means (PAL2 ... PALn) address the read-write memories (RAM2 ... RAMn) in such a way that the read-write memories (RAM2 ... RAMn) have in each case two separate memory areas that cannot be mutually overwritten, one memory area of which is provided for data and the other memory area of which is provided for the program information.

4. Multiprocessor system according to Claim 2, characterized in that the means (PAL2 ... PALn) are designed as decoding logic modules.

5. Multiprocessor system according to one of Claims 1 to 4, characterized in that the multiprocessor system (2) contains a further read-write memory (RAM1) which is assigned to the microprocessor (MP1) via the bus system (B) and in which the program information for the microprocessor (MP1) can be stored.

6. Multiprocessor system according to Claim 5, characterized in that the means (PAL1) are designed as a decoding logic module which handles the memory organization of the further read-write memory (RAM1).

7. Multiprocessor system according to one of Claims 1 to 6, characterized in that the microprocessors (MP2 ... MPn) of the subprocessor systems (SUB1 ... SUBm) are designed as slave processors subordinate to the microprocessor (MP1) serving as the master processor.

8. Multiprocessor system according to one of Claims 1 to 7, characterized in that the multiprocessor system (2) is provided for controlling functional sequences and functional units in printing devices (19).

## Revendications

1. Système à multiprocesseurs comportant un microprocesseur (MP1), une mémoire à valeur fixe (EPROM1) associée au microprocesseur (MP1), ainsi que plusieurs systèmes à sous-processeurs (SUB1 ... SUBm) comportant des mémoires d'écriture/lecture (RAM2 ... RAMn) associées, qui sont reliées entre elles, par l'intermédiaire d'un système de bus (B), pour la transmission d' informations de programmation, du type dans lequel l'information de programmation est mémorisée dans la mémoire à valeur fixe (EPROM1), non seulement pour le microprocesseur (MP1), mais également pour les systèmes à sous-processeurs (SUB1 ... SUBM), et comportant des moyens (MP1, PAL1 ... PALn) pour transmettre, lors d'un processus d'écriture (WR) provenant du microprocesseur (MP1), l'information de programmation au système à sous-processeurs (SUB1 ... SUBm) et pour la mémoriser, caractérisé par
a) des moyens (MP1, PAL1 ... PALn) pour relire dans le système à sous-processeurs (SUB1 ... SUBn), après la transmission, et lors d'un processus de lecture (RD), l'information de programmation mémorisée,
b) des moyens (MP1, PAL1 ... PALn) pour comparer l'information de programmation transmise au système à sous-processeurs (SUB1 ... SUBm) avec l'information de programmation relue à partir du système à sous-processeurs (SUB1 ... SUBm), et pour libérer le système à sous-processeurs (SUB1 ... SUBm) en fonction du résultat de comparaison ou pour recommencer, dans le cas de défauts du processus écriture/lecture (WR, RD), et par
c) des moyens (MP1) pour déterminer, après un nombre prédéterminé de processus d'écriture/lecture (WR, RD) sans défaut, la capacité de fonctionnement du système à multiprocesseurs et pour le signaler.

2. Système à multiprocesseurs suivant la revendication 1, caractérisé en ce que les systèmes à sous-processeurs (SUB1 ... SUBm) comportent d'autres microprocesseurs (MP2 ... MPn), les mémoires d'écriture/lecture (RAM2 ... RAMn) et les moyens (PAL2 ... PALn).

3. Système à multiprocesseurs suivant la revendication 2, caractérisé en ce que les moyens (PAL2 ... PALn) commandent les mémoires d'écriture/lecture (RAM2 ... RAMn) de telle sorte que les mémoires d'écriture/lecture (RAM2 ... RAMn) comportent respectivement deux zones de mémoire séparées qui ne peuvent pas être réciproquement réécrites, et parmi lesquelles la première zone de mémoire est prévue pour les données et la deuxième zone de mémoire est prévue pour les informations de programmation.

4. Système à multiprocesseurs suivant la revendication 2, caractérisé en ce que les moyens (PAL2 ... PALn) sont réalisés en tant que modules logiques de décodage.

5. Système à multiprocesseurs suivant l'une des revendications 1 à 4, caractérisé en ce que le système à multiprocesseurs (2) comporte une autre mémoire d'écriture/lecture (RAM1), qui est associée, par l'intermédiaire du système de bus (B), au microprocesseur (MP1), et dans laquelle l'information de programmation pour le microprocesseur (MP1) peut être mémorisée.

6. Système à multiprocesseurs suivant la revendication 5, caractérisé en ce que les moyens (PAL1) sont réalisés en tant que module logique de décodage, qui effectue l'organisation de mémoire de l'autre mémoire d'écriture/lecture (RAM1).

7. Système à multiprocesseurs suivant l'une des revendications 1 à 6, caractérisé en ce que les microprocesseurs (MP2 ... MPn) des systèmes à sous-processeurs (SUB1 ... SUBn) sont réalisés en tant que processeurs-esclaves, en sous-ordination par rapport au microprocesseur (MP1) servant de processeur-maître.

8. Système à multiprocesseurs suivant l'une des revendications 1 à 7, caractérisé en ce qu'il est prévu pour la commande d'exécutions de fonctions et d'unités de dispositifs d'impression (19).
